Europäisches Patentamt

European Patent Office

Office européen des brevets

(11) Numéro de publication: **0 565 619 B1**

(12) **FASCICULE DE BREVET EUROPEEN**

(45) Date de publication de fascicule du brevet: **05.07.95**

(51) Int. Cl.⁶: **B29D 30/38**, B29C 70/00, B60C 9/20, B65H 81/02, D04H 3/05

(21) Numéro de dépôt: **92903723.2**

(22) Date de dépôt: **27.12.91**

(86) Numéro de dépôt internationale :
**PCT/FR91/01078**

(87) Numéro de publication internationale :
**WO 92/12001 (23.07.92 92/19)**

(54) **PROCEDE ET DISPOSITIF POUR APPLIQUER PLUSIEURS FILS SUR UN SUPPORT A L'AIDE DE DENTS FLEXIBLES, NAPPE OBTENUE ET ARTICLE COMPORTANT AU MOINS UNE NAPPE: ENVELOPPE DE PNEUMATIOUE.**

(30) Priorité: **04.01.91 FR 9100098**

(43) Date de publication de la demande:
**20.10.93 Bulletin 93/42**

(45) Mention de la délivrance du brevet:
**05.07.95 Bulletin 95/27**

(84) Etats contractants désignés:
**BE CH DE ES FR GB IT LI LU**

(56) Documents cités:
**EP-A- 0 335 718**
**FR-A- 2 162 040**

(73) Titulaire: **COMPAGNIE GENERALE DES ETA-BLISSEMENTS MICHELIN - MICHELIN & CIE**
**12, Cours Sablon**
**F-63040 Clermont-Ferrand Cédex (FR)**

(72) Inventeur: **MILLIER, Laurent 31, rue Pierre-Larousse**
**Paron**
**F-89100 Sens (FR)**

(74) Mandataire: **Doussaint, Jean-Marie**
**MICHELIN & CIE**
**Service K. Brevets**
**23, Place des Carmes**
**F-63040 Clermont-Ferrand Cedex (FR)**

EP 0 565 619 B1

Rank Xerox (UK) Business Services
(3.10/3.09/3.3.3)

**Description**

L'invention concerne les dispositifs et les procédés permettant d'appliquer des fils sur des supports, notamment des supports en matières plastiques ou en caoutchouc, ces dispositifs et ces procédés permettant par exemple la réalisation de nappes de renfort, notamment de nappes de renfort pour enveloppes de pneumatiques. L'invention concerne en particulier les procédés et les dispositifs qui permettent d'appliquer des fils sur un support en leur donnant une forme non rectiligne, par exemple une forme sinueuse.

Des dispositifs permettant d'appliquer des fils sur un support en leur donnant une forme sinueuse sont décrits par exemple dans les brevets ou demandes de brevets suivants : FR 2 042 859, FR 2 325 497, FR 2 501 126, SU 704 816, WO 81/1151.

Ces dispositifs présentent au moins un des inconvénients suivants :

- complexité des dispositifs donnant lieu à des pannes fréquentes, ou nécessitant un entretien coûteux et fréquent ;
- manque de précision dans la pose des fils, de telle sorte que les nappes obtenues ont une géométrie hétérogène et présentent de ce fait des caractéristiques physiques qui varient suivant leur longueur.

La demande EP-A 318 791 décrit un dispositif permettant d'appliquer des fils sur un support en utilisant deux pinces, une pince avant et une pince arrière, dans la direction de progression du support et des fils, le dispositif comportant des moyens permettant d'ouvrir et de fermer les pinces, et des moyens permettant de déplacer la pince arrière suivant la direction de progression, ou suivant une direction inverse à la direction de progression, ainsi que des moyens pour déplacer les fils dans des directions transversales. Le dispositif décrit dans cette demande EP-A-318 791 permet de déposer les fils avec une grande précision mais la vitesse de pose est relativement lente, par suite de la succession complexe des mouvements des pinces, qui nécessitent des arrêts du support lors des mouvements transversaux des fils, avant qu'ils ne soient appliqués sur le support, et lors de l'application des fils sur le support.

Le but de l'invention est de remédier à ces inconvénients.

En conséquence, le procédé conforme à l'invention pour appliquer plusieurs fils sur au moins un support, de façon à obtenir au moins une nappe, en donnant aux fils une forme non rectiligne, est caractérisé par les points suivants :

a) on fait arriver les fils, chacun avec une vitesse maîtrisée, sur un tambour cylindrique en rotation autour d'un axe ;

b) on donne aux fils la forme non rectiligne à l'aide de dents, que l'on déplace les unes par rapport aux autres, parallèlement à l'axe de rotation ;

c) au moins une partie de ces dents sont flexibles, entre une extrémité libre, au contact d'un fil, et une zone d'ancrage ;

d) grâce à la flexibilité des dents flexibles, l'amplitude de déplacement de chaque fil mesurée parallèlement à l'axe de rotation est déterminée par le rapport entre la vitesse d'arrivée de ce fil et la vitesse périphérique du tambour ;

e) on fait arriver le ou les supports au contact du tambour et on applique les fils sur le ou les supports, après avoir déplacé les fils sur le tambour ;

f) on enlève du tambour la ou les nappes constituées chacune par le support, ou un support, et par les fils au contact de ce support.

L'invention concerne également un dispositif pour appliquer plusieurs fils sur au moins un support, de façon à obtenir au moins une nappe, en donnant aux fils une forme non rectiligne, le dispositif étant caractérisé par les points suivants :

a) il comporte un tambour avec des moyens permettant d'entraîner le tambour en rotation autour d'un axe ;

b) il comporte des moyens permettant de faire arriver les fils, chacun avec une vitesse maîtrisée, sur le tambour ;

c) il comporte des dents et des moyens permettant de déplacer ces dents les unes par rapport aux autres, parallèlement à l'axe de rotation, de façon à donner aux fils la forme non rectiligne ;

d) au moins une partie de ces dents sont flexibles, entre une extrémité libre, au contat d'un fil, et une zone d'ancrage ;

e) il comporte des moyens permettant de faire arriver le ou les supports au contact du tambour et d'appliquer les fils sur le ou les supports, après que ces fils aient été déplacés ;

f) il comporte des moyens permettant d'enlever du tambour la ou les nappes constituées chacune par le support, ou un support, et par les fils au contact de ce support.

L'invention concerne également les nappes obtenues avec le procédé ou le dispositif précédemment décrits, ainsi que les articles incorporant ces nappes, ces articles étant par exemple des tuyaux, des membranes, des courroies, des enveloppes de pneumatiques.

Le terme "fil" doit être pris dans un sens très général. Un fil peut être un "fil simple" constitué par exemple par un ou plusieurs filaments. Lorsque le fil simple est constitué par un seul filament il est appelé "monofilament" et lorsque le fil simple est constitué par plusieurs filaments, il est appelé "multifilament".

Un fil peut être d'autre part lui-même un ensemble de fils simples. A titre d'exemple, un tel ensemble est appelé "retors" lorsqu'il est constitué par plusieurs fils simples réunis par une seule opération de torsion, et un tel ensemble est appelé "câblé" losqu'il est constitué par plusieurs fils, dont au moins un est un retors, réunis par une ou plusieurs opérations de torsion.

L'invention sera aisément comprise à l'aide des exemples non limitatifs qui suivent et des figures toutes schématiques relatives à ces exemples. Sur le dessin :
- la figure 1 représente en coupe un dispositif conforme à l'invention ;
- la figure 2 représente, vu de profil, selon la flèche F représentée à la figure 1, le dispositif représenté à la figure 1, la coupe de la figure 1 étant schématisée par les segments de droite I-I à la figure 2 ;
- la figure 3 représente en coupe une portion du dispositif représenté aux figures 1 et 2 ;
- la figure 4 représente en coupe partielle la portion de dispositif représentée à la figure 3 selon deux états référencés 4-I et 4-II, la coupe de la figure 4 étant schématisée par les segments de droite IV-IV à la figure 3 ;
- les figures 5 et 6 représentent chacune une disposition des fils sur le tambour du dispositif représenté aux figures 1 et 2 ;
- la figure 7 représente en coupe une portion d'un autre dispositif conforme à l'invention.

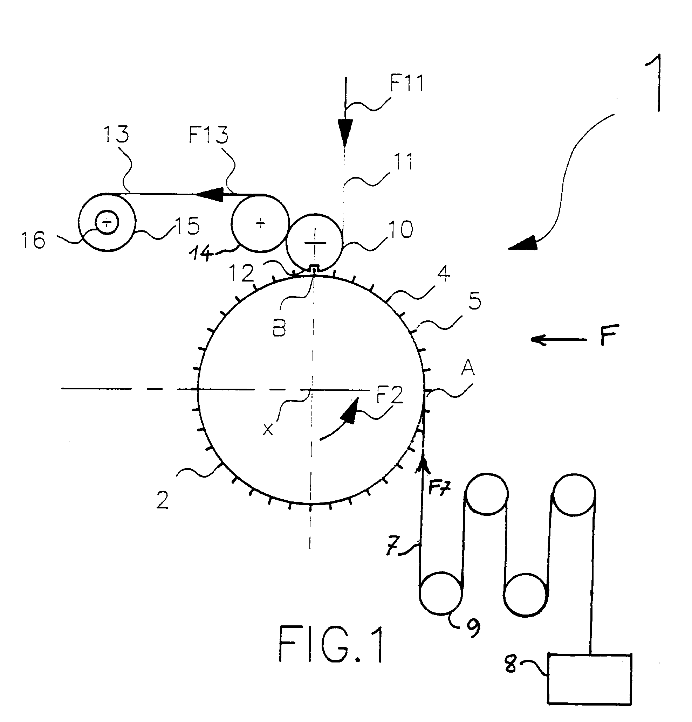

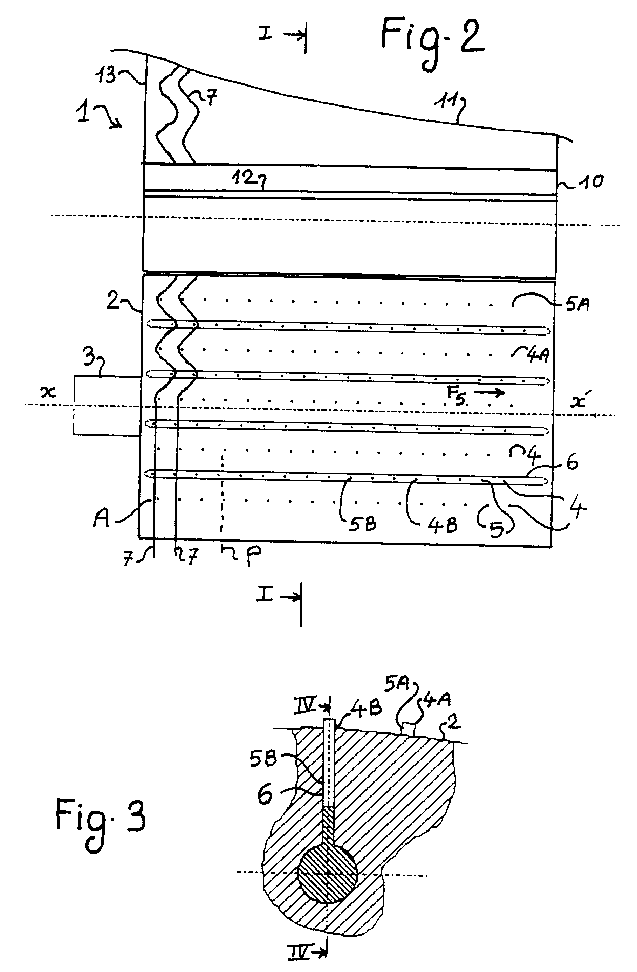

Les figures 1 et 2 représentent un dispositif 1 conforme à l'invention. Ce dispositif 1 comporte un tambour 2 de forme générale cylindrique, et un moteur 3 permettant d'entraîner le tambour 2 en rotation autour de l'axe xx'. La figure 1 est une coupe perpendiculaire à l'axe xx', qui est représenté par la lettre x sur cette figure, et la figure 2 est une vue de profil, selon la flèche F représentée à la figure 1, du dispositif 1.

La rotation du tambour 2 est schématisée par la flèche $F_2$ à la figure 1. Le dispositif 1 comporte des rangées 4 de dents 5. Une rangée 4 sur deux, référencée 4A est telle que ses dents 5A soient fixes, et les autres rangées, référencées 4B ont des dents 5B flexibles, le nombre de dents 5B flexibles d'une rangée 4B quelconque étant le même pour toutes les rangées 4B et égal au nombre de dents 5A fixes d'une rangée 4A quelconque qui est aussi le même pour toutes les rangées 4A. Les dents fixes 5A sont fixées directement sur le tambour 2, les rangées 4A de ces dents étant parallèles à l'axe xx' et disposées selon des génératrices du cylindre 2. Les dents mobiles 5B sont disposées dans des rainures 6 du tambour 2, une rainure 6 pour chaque rangée 4B, chacune de ces rainures 6 étant orientée parallèlement à l'axe xx' et selon une génératrice du cylindre 2. Les moyens permettant de déplacer les dents mobiles 5B ne sont pas représentés sur les figures 1 et 2 et ils seront décrits plus en détail ultérieurement.

On fait arriver des fils 7 au contact du tambour 2 et des dents 5 des rangées 4. Pour cela, les fils 7 proviennent d'un dispositif d'alimentation comportant par exemple un cantre 8 et un cabestan 9. Chacun des fils 7 arrive sur le tambour 2 avec une vitesse maîtrisée. L'endroit où les fils 7 arrivent au contact du tambour 2 est schématisé par la lettre A. A cet endroit A, les dents fixes 5A et les dents mobiles 5B des rangées 4A, 4B sont pratiquement disposées dans des plans P perpendiculaires à l'axe xx', ces plans étant les mêmes pour les dents fixes 5A et les dents mobiles 5B. Dans un but de simplification, la figure 2 ne représente que deux fils 7, et un seul plan P (représenté en pointillés). Par suite de l'orientation des dents 5 dans des plans P, chaque fil 7 contacte le tambour 2 pratiquement parallèlement aux plans P selon un cercle d'axe xx', entre des couples de dents fixes 5A et entre des couples de dents mobiles 5B.

Lors de la rotation du tambour 2, à partir de l'endroit A, il se produit un déplacement des dents mobiles 5B selon les flèches $F_5$, ce qui provoque une déformation des fils entraînés par les dents 5B et ces fils 7 ne sont plus circulaires sur le tambour 2, mais prennent une forme sinueuse, les rangées 4 étant entraînées en rotation autour de l'axe xx' avec la même vitesse angulaire que le tambour 2.

Les fils 7, après leur déplacement précité, parviennent au rouleau 10 qui permet d'appliquer par calandrage le support 11 sur le tambour 2. Les moyens permettant d'alimenter le rouleau 10 en support 11 sont connus et ils ne sont pas représentés sur le dessin dans un but de simplification. Le rouleau 10 comporte des rainures 12 qui sont orientées selon les génératrices du rouleau 10. La disposition des rainures 12 sur le rouleau 10 est telle qu'à l'endroit où le rouleau 10 applique le support 11 sur le tambour 2, les dents 5A, 5B traversent le support 11 et se trouvent disposées dans les rainures 12, sans toucher le rouleau 10. Cet endroit est référencé B à la figure 1. Pour la simplicité du dessin, l'arrivée du support 11 n'est pas représentée à la figure 2, et une seule rainure 12 est représentée sur les figures 1 et 2.

La nappe 13 constituée par le support 11 et les fils 7 sinueux appliqués sur ce support passe ensuite entre le rouleau 10 et un rouleau 14 d'extraction, et on enroule la nappe 13 sur la bobine 15 actionnée par le moteur 16. Les axes des rouleaux 10, 14 et de la bobine 15 ne sont pas référencés sur le dessin et sont parallèles a l'axe xx'.

Les progressions des fils 7, du support 11 et de la nappe 13 sont représentées respectivement par les flèches F7, F11 et F13 à la figure 1.

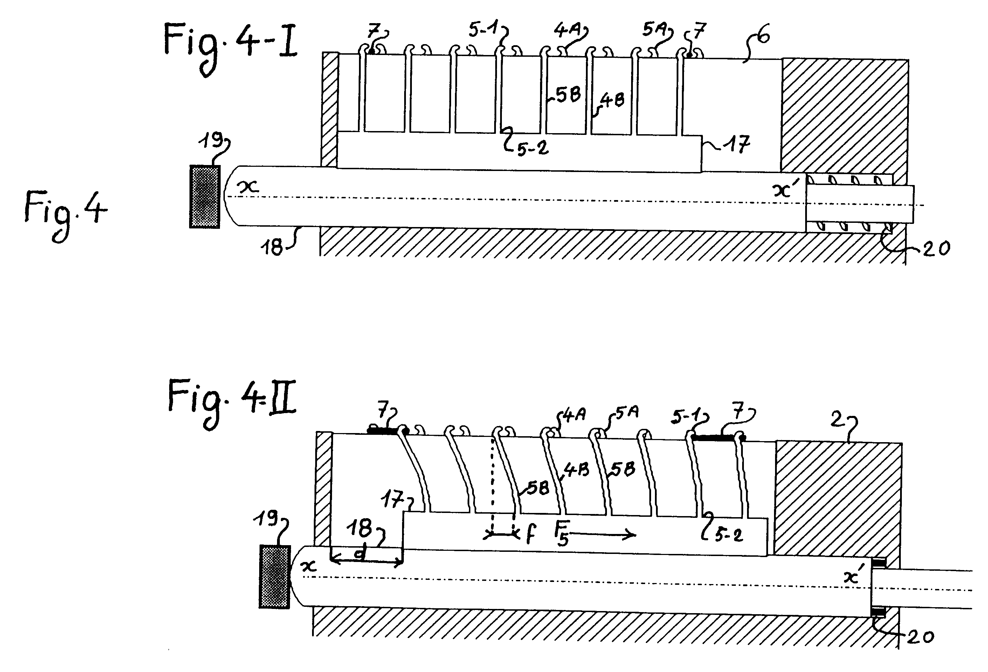

Les figures 3 et 4 explicitent le fonctionnement des dents mobiles 5B.

La figure 3 représente une portion du dispositif 1 comportant une rangée 4B de dents mobiles 5B ainsi qu'une rangée voisine 4A de dents fixes 5A, et la portion correspondante du tambour 2. La coupe de la figure 3 est effectuée perpendiculairement à l'axe xx', comme la figure 1.

La figure 4 représente la rangée 4B correspondant à la figure 3, la figure 4 étant une coupe partielle selon un plan contenant l'axe xx', la coupe de la figure 4 étant schématisée par les segments de ligne droite IV-IV à la figure 3. Cette figure 4 représente deux états référencés 4-I et 4-II. Chaque dent flexible 5B comporte une extrémité libre 5-1, destinée à venir au contact d'un fil 7, et une zone d'ancrage 5-2. Toutes les zones d'ancrage 5-2 de la rangée 4B sont liées de façon rigide à une pièce 17, cette pièce 17 et les dents 5B formant un bloc sous forme de peigne, réalisé par exemple d'une seule pièce par moulage d'une matière plastique, ou par usinage d'un matériau métallique. Les dents 5B sont flexibles entre leur extrémité libre 5-1 et leur zone d'ancrage 5-2, la flexion des dents 5B s'effectuant pratiquement selon un plan passant par l'axe xx', c'est-à-dire le plan de la figure 4. Les rangées d'extrémité 5-1 et les rangées de dents fixes 5A sont pratiquement disposées selon des génératrices du cylindre 2. Pour la simplicité du dessin seuls deux fils 7 sont représentés à la figure 4.

La pièce 17 est solidaire d'une barre 18 susceptible de venir au contact d'une came 19 grâce à un ressort de rappel 20. Pour la simplicité de la figure 4, la pièce 17, la barre 18 et les dents 5B ne sont pas représentées coupées. La partie 4-I de la figure 4 représente la position de la rangée 4B lorsque la came 19 n'exerce aucune action sur la barre 18. Dans ce cas les dents 5B ont une position non fléchie, chacune se trouvant pratiquement dans un plan P précédemment défini contenant au moins une dent 5B. Les dents 5B se trouvent dans cette position lorsqu'elles reçoivent en A les fils 7.

La partie 4-II de la figure 4 représente la position de la rangée 4B lorsque la came 19 exerce une action sur la barre 18. Dans ce cas, il se produit un déplacement des dents 5B dans le sens de la flèche F5, parallèle à l'axe xx', donc dans le plan de la figure 4. D'autre part, il se produit une flexion des dents 5B, les fils 7 limitant la course des extrémités libres 5-1 des dents 5B à une valeur inférieure à la course de leur zone d'ancrage 5-2. La course de la zone d'ancrage 5-2 de toutes les dents 5B est la même pour toute la rangée 4B, cette course étant référencée "d" à la figure 4-II. La flèche de chaque dent 5B est référencée "f", une seule de ces flèches étant représentée à la figure 4-II. La course "c" de l'extrémité 5-1 d'une dent 5B, dans le sens de la flèche F5, est donc égale à d-f. Les dents 5B prennent cette position après qu'elles aient reçu les fils 7 en A et jusqu'à l'application du support 11 en B. La disposition est identique à ce qui a été décrit pour toutes les rangées 4B de dents mobiles 5B.

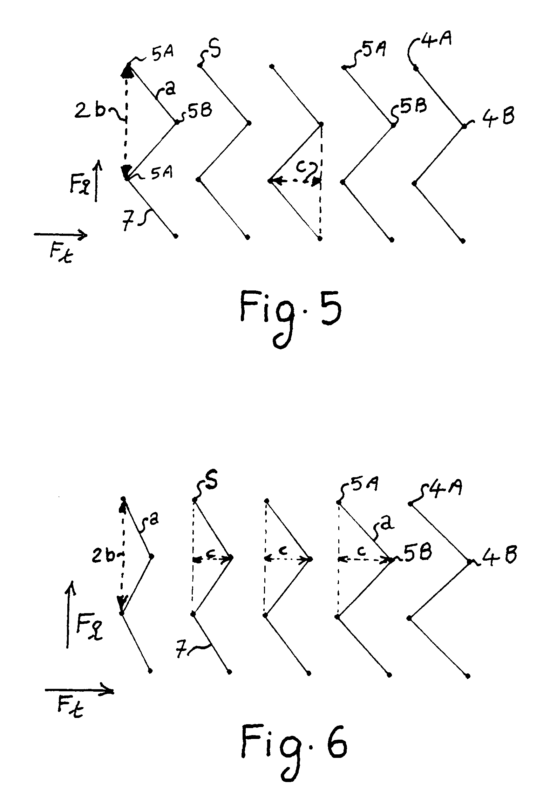

Les figures 5 et 6 représentent chacune des portions de cinq fils 7 disposés sur le tambour 2 lors de la réalisation de la nappe 13, à l'endroit B, c'est-à-dire au moment où le support 11 est appliqué contre les fils 7. Sur les figures 5 et 6, la direction longitudinale, c'est-à-dire la direction moyenne des fils 7, correspondant à des cercles du tambour 2 d'axe xx', est représentée par Fl et la direction transversale, correspondant aux génératrices du tambour 2, est représentée par la flèche Ft.

Les fils 7 des figures 5 et 6 ont tous une forme sinueuse par exemple périodique. Par définition, le taux T d'un fil 7 est le rapport entre, d'une part, la longueur d'une portion de fil ramené à une position rectiligne, et, d'autre part, la distance rectiligne entre les extrémités de cette portion lorsque le fil a une forme sinueuse. Aux figures 5 et 6, chaque fil 7 a des tronçons pratiquement rectilignes entre deux dents 5A, 5B successives au contact de ce fil. Sur ces figures 5 et 6, la longueur de fil 7 entre une dent 5A et une dent 5B successives est représentée par "a" et la distance entre deux dents 5A successives est représentée par 2b "b" représentant la distance entre deux rangées successives 4A, 4B, cette distance étant par exemple constante sur tout le pourtour du tambour 2. On a donc dans ce cas $T = \frac{a}{b}$. L'invention s'applique au cas où les fils 7 ont des formes sinueuses qui ne comportent pas de segment rectiligne, T ayant toujours la même définition. Pour un fil 7 donné, quelconque, T est égal au rapport entre la vitesse à laquelle on fait arriver ce fil 7 sur le tambour 2, et la vitesse périphérique de rotation du tambour 2, le fil 7 étant supposé inextensible.

Sur la figure 5, les courses "c" des extrémités libres 5-1 sont toutes identiques car les fils 7 ont tous été introduits sur le tambour 2 avec la même vitesse, le taux T est alors le même pour tous les fils 7.

Sur la figure 6, les courses "c" des extrémités libres 5-1 sont différentes d'un fil à l'autre, car les fils 7 ont tous été introduits sur le tambour 2 avec des vitesses différentes. Le taux T varie donc d'un fil 7 à l'autre. La figure 4-II correspond à un tel cas de réalisation, la flèche f variant d'un fil 7 à l'autre.

Sur la nappe 13 terminée, les fils 7 gardent pratiquement la disposition qu'ils avaient juste avant le retrait des dents 5 dû à la rotation du tambour 2, c'est-à-dire que les sommets S des trajets sinueux des fils 7 correspondent pratiquement à la position antérieure des dents 5A, 5B (figures 5 et 6).

Il est nécessaire de maîtriser la vitesse à laquelle on délivre les fils 7 sur le tambour 2. Ce contrôle peut être réalisé par exemple selon deux méthodes. Dans une première méthode, on utilise un cabestan 9 unique, chaque rouleau du cabestan comportant autant de galets que de vitesses différentes pour les fils 7. Pour modifier la loi de variation des vitesses des fils 7, il suffit de modifier l'empilement des galets sur les arbres cannelés des tambours. Ces arbres cannelés et le tambour 2 sont entraînés par exemple par un moteur unique avec une chaîne cinématique sans glissement utilisant par exemple des engrenages, des chaînes ou des courroies crantées. On assure ainsi de façon mécanique le rapport des vitesses entre les fils 7 et le tambour 2.

Dans une deuxième méthode, on utilise autant de cabestans 9 qu'il y a de vitesses différentes, la vitesse variant donc d'un cabestan à l'autre, ces cabestans étant motorisés séparément avec, pour chacun, un asservissement de la vitesse en fonction de la vitesse périphérique du tambour. Cette dernière méthode est actuellement plus coûteuse que la précédente, mais elle procure une plus grande souplesse.

Les deux méthodes précédemment mentionnées sont connues et elles ne sont pas représentées sur le dessin dans un but de simplification.

Il est possible de faire varier la vitesse pour des groupes de fils, et non fil à fil, pour simplifier la réalisation, c'est-à-dire que, dans la première méthode, chaque galet correspond alors à un groupe de fil ayant la même vitesse d'introduction sur le tambour 2, et, dans la deuxième méthode, chaque cabestan correspond à un tel groupe de fils. Dans ce cas, il peut être avantageux d'avoir, dans chaque rangée 4B, une seule dent fourchue 5B par groupe de fils, cette dent ayant autant d'extrémités libres 5-1 qu'il y a de fils 7 par groupe.

L'invention présente les avantages suivants :
- On opère en continu, sans arrêter la rotation du tambour 2, ce qui permet d'avoir des vitesses élevées qui peuvent par exemple atteindre ou dépasser 5 m/min.
- On obtient une nappe 13 dont les fils 7 sont disposés avec une grande régularité sur le support 11. Le taux T d'un fil 7 est déterminé, comme mentionné précédemment, par le rapport entre la vitesse d'arrivée de ce fil 7 sur le tambour 2 et la vitesse périphérique de ce tambour. Comme il est possible d'imposer pour ce rapport des valeurs voulues, le taux T peut être maîtrisé avec une grande précision. La fluctuation du taux T de chaque fil est par exemple de 0,5 %, par excès ou par défaut par rapport à une valeur nominale quelconque $T_n$, choisie pour ce fil.

- Le taux nominal $T_n$ peut varier dans de larges limites, d'un fil 7 à l'autre de la nappe 13, ce taux supérieur à 1 pouvant par exemple aller jusqu'à 3.
- Grâce à la grande précision des taux T pour la nappe 13, celle-ci se caractérise par des propriétés mécaniques bien définies dans l'article où elle est incorporée, par exemple une enveloppe de pneumatique, et ceci même si cet article subit une conformation lors de sa fabrication.
- La variation du taux $T_n$ est très facile à obtenir, on peut donc modifier rapidement ce taux lors d'une fabrication, de façon à avoir une variation de $T_n$ non seulement dans le sens transversal, c'est-à-dire parallèlement à l'axe xx', mais également dans le sens longitudinal par exemple lors des réglages du dispositif, c'est-à-dire dans le sens de déroulement du fil 7 et du support 11.

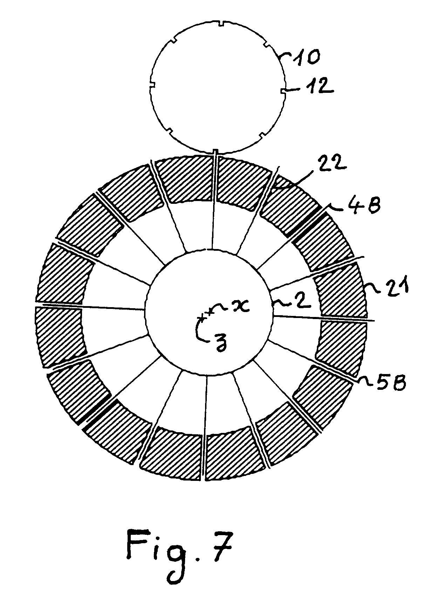

En général, les fils 7 adhèrent suffisamment au support 11 pour se séparer spontanément des dents 5 à l'endroit B. Cependant, il peut être utile de rendre rétractiles les dents fixes 5A et mobiles 5B, par exemple avec un système excentrique tel que le montre la figure 7. Un excentrique creux 21 entoure le tambour 2 dont le diamètre est plus petit que celui de l'excentrique 21. Cet excentrique tourne autour de son axe représenté par z sur la figure 7, tandis que le tambour 2 tourne autour de son axe xx', représenté par x, différent de z, la figure 7 étant une coupe perpendiculaire aux axes x, z qui sont parallèles. L'excentrique 21 et le tambour 2 tournent, chacun sur son axe, avec la même vitesse angulaire. Les dents 5, fixes ou mobiles dépassent fortement du tambour 2, et peuvent passer à travers l'excentrique 21 grâce à des saignées 22 usinées dans celui-ci et parallèles aux axes x, z. En disposant correctement l'axe z, on peut obtenir que les dents 5 finissent de se rétracter dans les saignées 22, précisément à l'endroit où le support 11 est appliqué sur les fils 7, c'est-à-dire à l'endroit B. Ceci permet de libérer les fils 7 qui ne risquent donc pas de rester accrochés aux dents 5.

D'autre part, dans le mode de réalisation précédemment décrit, le passage des fils en position sinueuse était obtenu par l'action d'une came, ce qui provoquait la compression d'un ressort. Dans un autre mode de réalisation envisageable, ce passage peut être réalisé par cessation de l'action d'une came provoquant la détente d'un ressort.

La nappe 13 peut être utilisée comme renfort dans des articles, par exemple des tuyaux, des membranes, des courroies, des enveloppes de pneumatiques.

Il est possible de faire disparaître la forme sinueuse des fils 7, lors de la conformation de l'article où la nappe 13 est utilisée, comme décrit dans la demande EP-A 318 791 précitée, ou bien cette forme sinueuse peut subsister en totalité ou en partie dans l'article terminé.

Les fils 7 sont de préférence des fils textiles dont le diamètre varie de 0,2 à 4 mm.

L'invention couvre aussi les cas où la diminution du taux nominal $T_n$ est réversible, par exemple dans le cas d'une membrane constituée par une nappe conforme à l'invention dont le support est élastique, la déformation de cette membrane, par exemple sous l'effet de la pression d'un fluide, provoquant une diminution de ce taux, mais les fils reprenant leur taux $T_n$ initial lorsque la membrane reprend sa forme initiale. Cette membrane, réalisée par exemple en caoutchouc vulcanisé, peut servir notamment pour la confection, la conformation ou la vulcanisation d'enveloppes de pneumatiques.

Bien entendu, l'invention n'est pas limitée aux exemples de réalisation précédemment décrits.

C'est ainsi que, dans l'exemple précédemment décrit, les dents flexibles 5B sont celles dont les zones d'ancrages 5-2 sont déplacées, mais on peut envisager des cas où ces zones d'ancrage sont fixes, tandis qu'on déplace des dents rigides. On peut également envisager des cas où toutes les dents soient flexibles.

On peut également envisager que toutes les dents, rigides ou flexibles, aient des zones d'ancrage actionnées, par exemple les unes dans un sens les autres dans l'autre sens.

## Revendications

1.  Procédé pour appliquer plusieurs fils (7) sur au moins un support (11), de façon à obtenir au moins une nappe (13), en donnant aux fils (7) une forme non rectiligne, caractérisé par les points suivants :
    a) on fait arriver les fils (7), chacun avec une vitesse maîtrisée, sur un tambour (2) cylindrique en rotation autour d'un axe (xx',x) ;
    b) on donne aux fils (7) la forme non rectiligne à l'aide de dents (5), que l'on déplace les unes par rapport aux autres, parallèlement à l'axe de rotation ;
    c) au moins une partie de ces dents (5B) sont flexibles, entre une extrémité libre (5-1), au contact d'un fil (7), et une zone d'ancrage (5-2) ;
    d) grâce à la flexibilité des dents flexibles (5B), l'amplitude de déplacement de chaque fil (7) mesurée parallèlement à l'axe de rotation est déterminée par le rapport entre la vitesse d'arrivée de ce fil et la vitesse périphérique du tambour ;
    e) on fait arriver le ou les supports (11) au contact du tambour (2) et on applique les fils (7) sur le ou les supports (11), après avoir déplacé les fils (7) sur le tambour (2) ;
    f) on enlève du tambour (2) la ou les nappes (13) constituées chacune par le support (11), ou un support (11), et par les fils (7) au contact de ce support (11).

2.  Procédé selon la revendication 1, caractérisé en ce que les extrémités libres (5-1) des dents flexibles (5B) sont disposées selon des rangées (4B) parallèles à l'axe de rotation du tambour (2), et en ce que le tambour (2) comporte des rangées (4A) de dents fixes (5A) parallèles à l'axe de rotation du tambour, le nombre de dents (5A, 5B, 5) étant le même d'une rangée à l'autre, les rangées étant alternativement des rangées (4A) de dents fixes (5A) et des rangées (4B) de dents flexibles (5B), les rangées (4A) de dents fixes (5A) et les extrémités libres (5-1) des dents (5B) des rangées (4B) de dents flexibles étant pratiquement disposées selon des génératrices du cylindre du tambour (2).

3.  Procédé selon la revendication 2, caractérisé en ce que l'on fait arriver les fils (7) au contact du tambour (2), à un endroit (A) où les dents fixes (5A) et flexibles (5B) sont pratiquement disposées dans des plans (P) perpendiculaires à l'axe de rotation du tambour (2), ces plans (P) étant les mêmes pour les dents fixes (5A) et les dents flexibles (5B), les fils (7) étant disposées parallèlement à ces plans (P), entre des couples de dents fixes (5A) et des couples de dents flexibles (5B).

4.  Procédé selon l'une quelconque des revendications 1 à 3, caractérisé en ce que l'on donne aux fils (7) une forme sinueuse sur le tambour (2) et en ce l'on fait arriver le ou les supports (11) au contact du tambour (2) à un endroit où les fils (7) ont acquis sur le tambour leur forme sinueuse pratiquement définitive.

5.  Procédé selon la revendication 4, caractérisé en ce que la forme sinueuse est périodique.

6.  Procédé selon l'une quelconque des revendications 1 à 5, caractérisé en ce que l'on fait arriver les fils (7) sur le tambour (2) avec la même vitesse pour tous les fils (7).

7.  Procédé selon l'une quelconque des revendications 1 à 5, caractérisé en ce que l'on fait arriver les fils (7) sur le tambour (2) avec des vitesses différentes entre fils (7) ou entre groupes de fils (7).

8.  Dispositif (1) pour appliquer plusieurs fils (7) sur au moins un support (11), de façon à obtenir au moins une nappe (13), en donnant aux fils (7) une forme non rectiligne, le dispositif (1) étant caractérisé par les points suivants :
    a) il comporte un tambour (2) avec des moyens (3) permettant d'entraîner le tambour (2) en rotation autour d'un axe (xx', x);
    b) il comporte des moyens (8, 9) permettant de faire arriver les fils (7), chacun avec une vitesse maîtrisée sur le tambour (2);
    c) il comporte des dents (5) et des moyens (17, 18, 19, 20) permettant de déplacer ces dents (5) les unes par rapport aux autres, parallèlement à l'axe de rotation, de façon à donner aux fils (7) la forme non rectiligne ;
    d) au moins une partie de ces dents (5) sont flexibles (5B), entre une extrémité libre (5-1), au contact d'un fil (7), et une zone d'ancrage (5-2) ;
    e) il comporte des moyens permettant de faire arriver le ou les supports (11) au contact du tambour (2) et d'appliquer les fils (7) sur le ou les supports (11), après que ces fils (7) aient été déplacés ;
    f) il comporte des moyens (10, 14, 15, 16) permettant d'enlever du tambour (2) la ou les nappes (13) constituées chacune par le support (11), ou un support (11), et par les fils (7) au contact de ce support (11).

9.  Dispositif (1) selon la revendication 8, caractérisé en ce que les extrémités libres (5-1) des dents flexibles (5B) sont disposées selon des rangées (4B) parallèles à l'axe de rotation du tambour (2), et en ce que le tambour (2) comporte des rangées (4A) de dents fixes (5A) parallèles à l'axe de rotation du tambour (2), le nombre de dents (5) étant le même d'une rangée à l'autre, les rangées (4A, 4B) étant alternativement des rangées (4A) de dents fixes (5A) et des rangées (4B) de dents flexibles (5B), les rangées (4A) de dents fixes (5A) et les extrémités libres (5-1) dents (5B) des rangées (4B) de dents flexibles (5B) étant pratiquement disposées selon des génératrices du cylindre du tambour (2).

10. Dispositif (1) selon la revendication 9, caractérisé en ce que les moyens (8, 9) permettant de faire arriver les fils (7) sur le tambour (2) sont agencés de telle sorte qu'ils permettent de faire arriver les fils (7) au contact du tambour (2) à un endroit (A) où les dents fixes (5A) et flexibles (5B) sont pratiquement disposées dans des plans (P) perpendiculaires à l'axe de rotation du tambour (2), ces plans (P) étant les mêmes pour les dents fixes (5A) et les dents flexibles (5B), les fils (7) étant disposés parallèlement à ces plans (P), entre des couples de dents fixes (5A) et des couples de dents flexibles (5B).

11. Dispositif (1) selon l'une quelconque des revendications 8 à 10, caractérisé en ce que les dents fixes (5A) et flexibles (5B) sont agencées de façon à donner aux fils (7) une forme sinueuse sur le tambour (2) et en ce que les moyens permettant de faire arriver le ou les supports (11) au contact du tambour (2) et d'appliquer les fils (7) sur le ou les supports (11) sont agencés de telle sorte que le ou les supports (11) arrivent au contact du tambour (2) à un endroit (B) où les fils (7) ont acquis sur le tambour (2) leur forme sinueuse pratiquement définitive.

12. Dispositif (1) selon la revendication 11, caractérisé en ce que la forme sinueuse est périodique.

13. Dispositif (1) selon l'une quelconque des revendications 8 à 12, caractérisé en ce que les moyens (8, 9) permettant de faire arriver les fils (7) sur le tambour (2) sont agencés de façon à ce que tous les fils (7) aient la même vitesse, à leur arrivée sur le tambour (2).

14. Dispositif (1) selon l'une quelconque des revendications 8 à 12, caractérisé en ce que les moyens (8, 9) permettant de faire arriver les fils (7) sur le tambour (2) sont agencés de façon à ce que les fils (7), ou des groupes de fils (7), aient des vitesses différentes, à leur arrivée sur le tambour (2).

15. Nappe (13) obtenue avec le procédé conforme à l'une quelconque des revendications 1 à 7 ou avec le dispositif conforme à l'une quelconque des revendications 8 à 14, caractérisée en ce que le taux nominal Tn est le même pour tous les fils de la nappe.

16. Nappe (13) obtenue avec le procédé conforme à l'une quelconque des revendications 1 à 7 ou avec le dispositif conforme à l'une quelconque des revendications 8 à 14, caractérisée en ce que le taux nominal Tn des fils de cette nappe varie.

**Claims**

1.  A method for applying a plurality of threads (7) onto at least one support (11) so as to obtain at least one ply (13), while imparting a non-rectilinear shape to the threads (7), characterised by the following features:

a) the threads (7) are caused to arrive, each at a controlled speed, on a cylindrical drum (2) rotating about an axis (xx', x);

b) the threads (7) are given the non-rectilinear shape with the aid of teeth (5) which are displaced relative to each other, parallel to the axis of rotation;

c) at least part of these teeth (5B ) are flexible, between a free end (5-1), in contact with a thread (7), and an anchoring zone (5-2);

d) owing to the flexibility of the flexible teeth (5B), the amplitude of displacement of each thread (7) measured parallel to the axis of rotation is determined by the ratio between the speed of approach of this thread and the peripheral speed of the drum;

e) the support or supports (11) is or are brought into contact with the drum (2) and the threads (7) are applied to the support or supports (11) after having displaced the threads (7) on the drum (2);

f) the ply or plies (13) each formed by the support (11), or a support (11), and by the threads (7) in contact with this support (11) is or are removed from the drum (2).

2. A method according to Claim 1, characterised in that the free ends (5-1) of the flexible teeth (5B) are arranged in rows (4B) parallel to the axis of rotation of the drum (2), and in that the drum (2) comprises rows (4A) of fixed teeth (5A) which are parallel to the axis of rotation of the drum, the number of teeth (5A, 5B, 5) being the same from one row to the other, the rows being alternatively rows (4A) of fixed teeth (5A) and rows (4B) of flexible teeth (5B), the rows (4A) of fixed teeth (5A) and the free ends (5-1) of the teeth (5B) of the rows (4B) of flexible teeth being practically arranged along the generatrices of the cylinder of the drum (2).

3. A method according to Claim 2, characterised in that the threads (7) are brought into contact with the drum (2) at a place (A) where the fixed teeth (5A) and the flexible teeth (5B) are practically arranged in planes (P) perpendicular to the axis of rotation of the drum (2), these planes (P) being the same for the fixed teeth (5A) and the flexible teeth (5B), the threads (7) being arranged parallel to these planes (P), between pairs of fixed teeth (5A) and pairs of flexible teeth (5B).

4. A method according to any one of Claims 1 to 3, characterised in that a sinuous shape is imparted to the threads (7) on the drum (2) and in that the support or supports (11) is or are brought into contact with the drum (2) at a place where the threads (7) have acquired their practically definitive sinuous shape on the drum.

5. A method according to Claim 4, characterised in that the sinuous shape is periodic.

6. A method according to any one of Claims 1 to 5, characterised in that the threads (7) are introduced onto the drum (2) at the same speed for all the threads (7).

7. A method according to any one of Claims 1 to 5, characterised in that the threads (7) are introduced onto the drum (2) at different speeds between threads (7) or between groups of threads (7).

8. A device (1) for applying several threads (7) on at least one support (11), in such a manner as to obtain at least one ply (13), while imparting to the threads (7) a non-rectilinear shape, the device (1) being characterised by the following features:

a) it comprises a drum (2) with means (3) enabling the drum (2) to be driven in rotation about an axis (xx', x);

b) it comprises means (8, 9) which make it possible to cause the threads (7) to arrive, each at a controlled speed, on the drum (2);

c) it comprises teeth (5) and means (17, 18, 19, 20) which make it possible to displace these teeth (5) relative to each other, parallel to the axis of rotation, so as to impart the non-rectilinear shape to the threads (7);

d) at least part of these teeth (5) are flexible (5B), between a free end (5-1), in contact with a thread (7), and an anchoring zone (5-2);

e) it comprises means which make it possible to cause the support or supports (11) to come into contact with the drum (2) and to apply the threads (7) to the support or supports (11) after these threads (7) have been displaced;

f) it comprises means (10, 14, 15, 16) which make it possible to remove the ply or plies (13) each formed by the support (11), or a support (11), and by the threads (7) in contact with this support (11), from the drum (2).

9. A device (1) according to Claim 8, characterised in that the free ends (5-1) of the flexible teeth (5B) are arranged in rows (4B) parallel to the axis of rotation of the drum (2), and in that the drum (2) comprises rows (4A) of fixed teeth (5A) which are parallel to the axis of rotation of the drum (2), the number of teeth (5) being the same from one row to the other, the rows (4A, 4B) being alternatively rows (4A) of fixed teeth (5A) and rows (4B) of flexible teeth (5B), the rows (4A) of fixed teeth (5A) and the free ends (5-1) of the teeth (5B) of the rows (4B) of flexible teeth (5B) being practically arranged along generatrices of the cylinder of the drum (2).

10. A device (1) according to Claim 9, characterised in that the means (8, 9) making it possible to introduce the threads (7) on the drum (2) are arranged such that they enable the threads (7) to be brought into contact with the drum (2) at a place (A) where the fixed teeth (5A) and the flexible teeth (5B) are practically arranged in planes (P) perpendicular to the axis of rotation of the drum (2), these planes (P) being the same for the fixed teeth (5A) and the flexible teeth (5B), the threads (7) being arranged parallel to these planes (P), between pairs of fixed teeth (5A) and pairs of flexible teeth (5B).

11. A device (1) according to any one of Claims 8 to 10, characterized in that the fixed teeth (5A) and flexible teeth (5B) are arranged so as to impart a sinuous shape to the threads (7) on the drum (2) and in that the means making it possible for the support or supports (11) to be brought into contact with the drum (2) and to apply the threads (7) to the support or supports (11) are arranged such that the support or supports (11) is or are brought into contact with the drum (2) at a place (B) where the threads (7) have acquired their practically definitive sinuous shape on the drum (2).

12. A device (1) according to Claim 11, characterized in that the sinuous shape is periodic.

13. A device (1) according to any one of Claims 8 to 12, characterized in that the means (8, 9) making it possible for the threads (7) to be introduced onto the drum (2) are arranged such that all the threads (7) have the same speed when they arrive on the drum (2).

14. A device (1) according to any one of Claims 8 to 12, characterized in that the means (8, 9) which make it possible for the threads (7) to be introduced onto the drum (2) are arranged such that the threads (7), or the groups of threads (7), have different speeds when they arrive on the drum (2).

15. A ply (13) obtained with the method in accordance with any one of Claims 1 to 7 or using the device in accordance with any one of Claims 8 to 14, characterized in that the nominal ratio Tn is the same for all the threads of the ply.

16. A ply (13) obtained with the method in accordance with any one of Claims 1 to 7 or using the device in accordance with any one of Claims 8 to 14, characterised in that the nominal ratio Tn of the threads of this ply varies.

**Patentansprüche**

1. Verfahren zum Anbringen mehrerer Fäden (7) auf wenigstens einem Träger (11), um wenigstens eine Einlage (13) zu bilden, wobei den Fäden (7) eine nichtgeradlinige Form gegeben wird,
   **gekennzeichnet** durch folgende Punkte:
   a) die Fäden (7) werden, jeder mit einer gesteuerten Geschwindigkeit, auf eine um eine Achse (xx', x) drehbewegte zylindrische Trommel (2) geführt;
   b) die nichtgeradlinige Form wird den Fäden (7) mit Hilfe von Zähnen (5) gegeben, die parallel zur Drehachse gegeneinander verschoben werden;
   c) wenigstens ein Teil dieser Zähne (5B) ist flexibel zwischen einem in Kontakt mit einem Faden (7) befindlichen freien Ende (5-1) und einem Verankerungsabschnitt (5-2);
   d) aufgrund der Flexibilität der flexiblen Zähne (5B) ist die Verschiebungsamplitude jedes Fadens (7), gemessen parallel zur Drehachse, bestimmt durch das Verhältnis zwischen der Zufuhrgeschwindigkeit dieses Fadens und der Umfangsgeschwindigkeit der Trommel;
   e) der oder die Träger (11) werden in Kontakt mit der Trommel (2) gebracht, und die Fäden (7) werden an dem oder den Trägern (11) angebracht, nachdem die Fäden (7) auf der Trommel (2) verschoben worden sind;
   f) der oder die Einlagen (13), die jeweils aus dem Träger (11) oder einem Träger (11) und den mit diesem Träger (11) in Kontakt befindlichen Fäden (7) gebildet sind, werden von der Trommel (2) abgenommen.

2. Verfahren nach Anspruch 1,
   dadurch gekennzeichnet, daß
   die freien Enden (5-1) der flexiblen Zähne (5B) in zur Drehachse der Trommel (2) parallelen Reihen (4B) angeordnet sind, und dar die Trommel (2) Reihen (4A) von festen Zähnen (5A) parallel zur Drehachse der Trommel aufweist, wobei die Anzahl von Zähnen (5A, 5B, 5) von einer Reihe zur anderen dieselbe ist, die Reihen abwechselnd Reihen (4A) von festen Zähnen (5A) und Reihen (4B) von flexiblen Zähnen (5B) sind, die Reihen (4A) von festen Zähnen (5A) und die freien Enden (5-1) der Zähne (5B) der Reihen (4B) von flexiblen Zähnen praktisch entlang von Umhüllenden des Zylinders der Trommel (2) angeordnet sind.

3. Verfahren nach Anspruch 2,
   dadurch gekennzeichnet, daß
   die Fäden (7) an einem Ort (A) in Kontakt mit der Trommel (2) gebracht werden, an dem die festen (5A) und flexiblen Zähne (5B) praktisch in zur Rotationsachse der Trommel (2) senkrechten Ebenen (P) angeordnet sind, welche Ebenen (P) für die festen Zähne (5A) und die flexiblen Zähne (5B) dieselben sind, und daß die Fäden (7) parallel zu diesen Ebenen (P) zwischen Paaren von festen Zähnen (5A) und Paaren von flexiblen Zähnen (5B) angeordnet werden.

4. Verfahren nach einem der Ansprüche 1 bis 3,
   dadurch gekennzeichnet, daß
   den Fäden (7) auf der Trommel (2) eine Kurvenform gegeben wird, und daß der oder die Träger (11) an einem Ort in Kontakt mit der Trommel (2) gebracht werden, an dem die Fäden (7) auf der Trommel ihre praktisch endgültige Kurvenform angenommen haben.

5. Verfahren nach Anspruch 4,
   dadurch gekennzeichnet, daß
   die Kurvenform periodisch ist.

6. Verfahren nach einem der Ansprüche 1 bis 5,
   dadurch gekennzeichnet, daß
   die Fäden (7) auf die Trommel (2) mit gleicher Geschwindigkeit für alle Fäden (7) zugeführt werden.

7. Verfahren nach einem der Ansprüche 1 bis 5,
   dadurch gekennzeichnet, daß
   die Fäden (7) auf die Trommel (2) mit zwischen Fäden (7) oder zwischen Gruppen von Fäden (7) unterschiedlichen Geschwindigkeiten zugeführt werden.

8. Vorrichtung (1) zum Anbringen mehrerer Fäden (7) an wenigstens einem Träger (11), um wenigstens eine Einlage (13) zu bilden, wobei den Fäden (7) eine nichtgeradlinige Form gegeben wird, welche Vorrichtung (1) gekennzeichnet ist durch folgende Punkte:
   a) sie umfaßt eine Trommel (2) mit Antriebsmitteln (3) zum Antreiben der Trommel (2) in Drehung um eine Achse (xx', x);
   b) sie umfaßt Zufuhrmittel (8, 9) zum Zuführen der Fäden (7), jeweils mit gesteuerter Geschwindigkeit, auf die Trommel (2);
   c) sie umfaßt Zähne (5) und Verschiebungsmittel (17, 18, 19, 20) zum Verschieben dieser Zähne (5) gegeneinander parallel zur Drehachse, um den Fäden (7) die nichtgeradlinige Form zu geben;
   d) wenigstens ein Teil dieser Zähne (5) ist flexibel (5B) zwischen einem in Kontakt mit einem Faden (7) befindlichen freien Ende (5-1) und einem Verankerungsabschnitt (5-2);
   e) sie umfaßt Mittel zum Zuführen des oder der Träger (11) in Kontakt mit der Trommel (2) und zum Anbringen der Fäden (7) an dem oder den Trägern (11), nachdem diese Fäden (7) verschoben worden sind;
   f) sie umfaßt Abnahmemittel (10, 14, 15, 16) zum Abnehmen der jeweils aus dem Träger (11) oder einem Träger (11) und den in Kontakt mit diesem Träger (11) befindlichen Fäden (7) gebildeten Einlage oder Einlagen (13) von der Trommel (2).

9. Vorrichtung (1) nach Anspruch 8,
   dadurch gekennzeichnet, daß
   die freien Enden (5-1) der flexiblen Zähne (5B) in zur Rotationsachse der Trommel (2) parallelen Reihen (4B) angeordnet sind, und daß die Trommel (2) Reihen (4A) von festen Zähnen (5A) parallel zur Drehachse der Trommel (2) aufweist, wobei die Anzahl der Zähne (5) von einer Reihe zur anderen dieselbe ist, die Reihen (4A, 4B) abwechselnd Reihen (4A) von festen Zähnen (5A) und Reihen (4B) von flexiblen Zähnen (5B) sind, die Reihen (4A) von festen Zähnen (5A) und die freien Enden (5-1) der Zähne (5B) der Reihen (4B) von flexiblen Zähnen (5B) praktisch entlang von Umhüllenden des Zylinders der Trommel (2) angeordnet sind.

10. Vorrichtung (1) nach Anspruch 9,
    dadurch gekennzeichnet, daß
    die Zufuhrmittel (8, 9) zum Zuführen der Fäden (7) auf die Trommel (2) so eingerichtet sind, daß sie die Fäden (7) an einem Ort (A) in Kontakt mit der Trommel (2) zuführen können, an dem die festen Zähne (5A) und die flexiblen Zähne (5B) praktisch in zur Rotationsachse der Trommel (2) senkrechten Ebenen (P) angeordnet sind, welche Ebenen (P) für die festen Zähne (5A) und die flexiblen Zähne (5B) dieselben sind, und wobei die Fäden (7) parallel zu diesen Ebenen (P) zwischen Paaren von festen Zähnen (5A) und Paaren von flexiblen Zähnen (5B) angeordnet sind.

11. Vorrichtung (1) nach einem der Ansprüche 8 bis 10,
dadurch gekennzeichnet, daß
die festen Zähne (5A) und die flexiblen Zähne (5B) eingerichtet sind, um den Fäden (7) auf der Trommel (2) eine Kurvenform zu verleihen, und daß die Mittel zum Zuführen des oder der Träger (11) in Kontakt mit der Trommel (2) und zum Anbringen der Fäden (7) an dem oder den Trägern (11) so eingerichtet sind, daß der oder die Träger (11) an einem Ort (B) in Kontakt mit der Trommel (2) kommen, an dem die Fäden (7) auf der Trommel (2) ihre praktisch endgültige Kurvenform eingenommen haben.

12. Vorrichtung (1) nach Anspruch 11,
dadurch gekennzeichnet, daß
die Kurvenform periodisch ist.

13. Vorrichtung (1) nach einem der Ansprüche 8 bis 12,
dadurch gekennzeichnet, daß
die Zufuhrmittel (8, 9) zum Zuführen der Fäden (7) auf die Trommel (2) so eingerichtet sind, daß alle Fäden (7) dieselbe Geschwindigkeit bei ihrem Eintreffen auf der Trommel (2) haben.

14. Vorrichtung (1) nach einem der Ansprüche 8 bis 12,
dadurch gekennzeichnet, daß
die Zufuhrmittel (8, 9) zum Zuführen der Fäden (7) auf die Trommel (2) so eingerichtet sind, daß die Fäden (7) oder Gruppen von Fäden (7) bei ihrem Eintreffen auf der Trommel (2) unterschiedliche Geschwindigkeiten haben.

15. Einlage (13), die nach dem Verfahren nach einem der Ansprüche 1 bis 7 oder mit der Vorrichtung nach einem der Ansprüche 8 bis 14 erzeugt ist,
dadurch gekennzeichnet, daß
das Nennverhältnis Tn für alle Fäden der Einlage dasselbe ist.

16. Einlage (13), die nach dem Verfahren nach einem der Ansprüche 1 bis 7 oder mit der Vorrichtung nach einem der Ansprüche 8 bis 14 erhalten ist,
dadurch gekennzeichnet, daß
das Nennverhältnis Tn der Fäden dieser Einlage variiert.

FIG.1

Fig. 2

Fig. 3

Fig. 4

Fig. 4-I

Fig. 4-II

EP 0 565 619 B1

Fig. 5

Fig. 6

Fig. 7